# EUROPÄISCHE PATENTSCHRIFT

(11) **EP 2 489 465 B1**
(45) Veröffentlichungstag und Bekanntmachung des Hinweises auf die Patenterteilung: **30.04.2014**
(21) Anmeldenummer: 12153975.3
(22) Anmeldetag: 06.02.2012
(51) Int. Cl.: B23Q 39/04, B23Q 39/02

(54) **Honmaschine mit Vorrichtung zur mechanischen Oberflächenbearbeitung von Werkstücken**
Honing machine with device for mechanical surface processing of workpieces
Machine à empierrer dotée d'un dispositif de traitement de surface mécanique de pièces usinées

(30) Priorität: 17.02.2011 DE 202011003069 U
(43) Veröffentlichungstag der Anmeldung: 22.08.2012
(73) Patentinhaber: KADIA Produktion GmbH + Co., 72622 Nürtingen (DE)
(72) Erfinder: Regler, Roland, 91166 Georgensgmünd (DE); Klein, Henning, 70178 Stuttgart (DE)
(74) Vertreter: Patentanwälte Ruff, Wilhelm, Beier, Dauster & Partner

(56) Entgegenhaltungen:
- DE-A1- 10 135 233
- US-A- 1 360 175
- US-A- 1 907 550
- US-A- 1 911 303
- US-A- 2 023 779

## Beschreibung

Die Erfindung betrifft eine Honmaschine mit einer Vorrichtung zur mechanischen Oberflächenbearbeitung von Werkstücken.

Das Honen gehört zu den trennenden Fertigungsverfahren, bei denen ein Werkstoffabtrag an der Werkstückoberfläche mittels geometrisch unbestimmter Schneide erfolgt. Dazu sind in einem Honwerkzeug Honleisten oder auch Honsteine vorgesehen, in denen das Schleifmittel gebunden ist. Mit Hilfe des Honwerkzeugs, das insbesondere für eine Bearbeitung von zylindrischen Bohrungen wie beispielsweise von Zylinderlaufflächen vorgesehen sein kann, ist eine Oberflächenfein- bzw. Endbearbeitung möglich. Charakteristisch für das Honen ist, dass eine rotatorische Schnittbewegung von einer translatorischen Schnittbewegung überlagert wird. Zum Antrieb des Honwerkzeugs und zur Erzeugung dieser Schnittbewegung weist eine Honmaschine jeweils entsprechende Antriebseinrichtungen auf. Das Honwerkzeug ist üblicherweise an einer Honspindel angeordnet, welche die erzeugte Rotations- und Translationsbewegung auf das Honwerkzeug überträgt. Zur Aufnahme der zu bearbeitenden Werkstücke sind Werkstückaufnahmevorrichtungen vorgesehen.

Aus dem Stand der Technik sind unterschiedliche Aufbaukonzepte für Vorrichtungen zur mechanischen Oberflächenbearbeitung bekannt. Unter anderem sind Rundtisch-Maschinen bekannt, bei denen ein Rundtisch als Transfereinrichtung zum Transport der Werkstücke zwischen einzelnen Bearbeitungsstationen eingesetzt wird. Mittels des Rundtisches, der um eine vertikale Achse drehbar ist, können die Werkstücke von einer Bearbeitungseinheit zur nächsten transferiert werden, ohne dass sie neu aufgenommen werden müssen. Mit Rundtisch-Maschinen können mehrere Werkstücke in einer Aufspannung unterschiedlichen Arbeitsgängen zugeführt werden oder gleichzeitig mehrere Werkstücke gleichermaßen bearbeitet werden, je Art der Bearbeitungseinheiten. So ist es beispielsweise möglich, in einer Aufspannung Werkstücke zu fräsen, zu bohren und zu honen.

In der DE 101 60 280 A1 ist eine Rundtisch-Maschine zur mechanischen Oberflächenbearbeitung beschrieben, die einen taktweise angetriebenen Rundtisch aufweist, auf dem in einer vorgegebenen Winkelteilung mehrere drehbare Werkstückaufnahmevorrichtungen angeordnet werden können. Der Rundtisch ist als ringförmiger Tisch bzw. als Ringtisch um eine vertikale Säule angeordnet, an dem, ebenfalls in einer festen Winkelteilung, mehrere Bearbeitungseinheiten angeordnet sind. Die Bearbeitungseinheiten sind jeweils umfangsseitig außen an der Säule oberhalb einer Ringtischebene in einem oberen Säulenbereich befestigt.

Der Ringtisch ist mittels entsprechender Lager drehbar in einem unteren Säulenbereich an der Säule gelagert und kann mittels eines elektromechanischen Drehantriebs oder eines NC-gesteuerten Direktantriebs angetrieben werden. Als Lager können Wälzlager und/oder Gleitlager verwendet werden.

Da die Werkstücke für den Fertigungsprozess mittels der Werkstückaufnahmevorrichtungen auf dem Ringtisch angeordnet werden, die Bearbeitungseinheiten jedoch an der Säule befestigt sind, ist es zur Erreichung hoher Genauigkeiten bei der Oberflächenbearbeitung erforderlich, den Ringtisch und die Bearbeitungseinheiten sowohl in vertikaler Richtung als auch in radialer Richtung präzise zueinander auszurichten. Dies bedeutet, dass die Positionen der Bearbeitungseinheiten, insbesondere in vertikaler Richtung, von der tatsächlichen Position des Ringtisches im montierten Zustand abhängig sind bzw. umgekehrt. Auch die Positionierung bzw. Ausrichtung des Ringtisches in radialer Richtung ist aufwändig, da der Ringtisch einerseits zur Aufnahme seiner Gewichtskraft fest mit der Säule verbunden werden muss, aber andererseits möglichst koaxial und konzentrisch zur Säule ausgerichtet sein soll.

Die Patentschrift US 1,907,550 beschreibt eine Werkzeugmaschine mit mehreren Bearbeitungseinheiten mit vertikalen Spindeln. Die Werkzeugmaschine hat eine Maschinenbasis und ein Maschinenoberteil mit einer vertikalen Säule, die auf der Maschinenbasis gelagert ist. Ein Ringtisch ist im unteren Säulenbereich angeordnet und ebenfalls auf der Maschinenbasis gelagert. Die Bearbeitungseinheiten sind an vertikal verfahrbaren Schlitten befestigt. Ein hydraulischer Antrieb im Inneren der Säule dient zur Erzeugung der Vertikalbewegung der Schlitten. Dazu ist der Kolben des Hydraulikantriebs über diverse Übertragungselemente mechanisch mit den vertikal verfahrbaren Schlitten gekoppelt. Zu den Übertragungselementen gehören Verbindungsstangen, die durch vertikale Schlitze in der Säulenwand hindurchgreifen und mit den vertikal verfahbaren Schlitten gekoppelt sind. Die Offenlegungsschrift DE 101 35 233 A1 offenbart eine Einrichtung zum Bearbeiten von Werkstücken, wobei mindestens eine Bearbeitungsstation innerhalb eines als Ringtisch ausgebildeten Werkstücktisches angeordnet ist und die übrigen Bearbeitungsstationen in Auβenumfangsbereich des Ringtisches angeordnet sind.

### AUFGABE UND LÖSUNG

Aufgabe der Erfindung ist es, eine Honmaschine mit einer flexiblen und einfach zu montierenden, wartungsfteundlichen Vorrichtung zur mechanischen Oberflächenbearbeitung sowie eine Honmaschine mit einer solchen Vorrichtung zu schaffen. Insbesondere soll der Fertigungsaufwand bei der Montage hinsichtlich der Ausrichtung gegenüber herkömmlichen Vorrichtungen reduziert werden.

Gelöst wird diese Aufgabe durch eine Honmaschine mit den Merkmalen des Anspruchs 1. Vorteilhafte Ausgestaltungen der Erfindung sind Gegenstand der abhängigen Ansprüche. Der Wortlaut der Ansprüche wird durch Bezugnahme zum Inhalt der Beschreibung gemacht.

Eine erfindungsgemäße Honmaschine hat eine Vorrichtung zur mechanischen Oberflächenbearbeitung von Werkstücken, insbesondere zum Honen, die eine Maschinenbasis, einen Ringtisch und ein Maschinenoberteil umfasst. Die Maschinenbasis weist eine Oberseite auf, auf welcher der Ringtisch und das Maschinenoberteil jeweils mit ihrer Unterseite angeordnet und ortsfest gelagert sind.

Das Maschinenoberteil weist eine vertikal angeordnete Säule mit einem oberen Säulenbereich und einem unteren Säulenbereich auf. Die Säule weist an ihrer Außenfläche im oberen Säulenbereich Einrichtungen zur Aufnahme mindestens einer mit einer Werkzeugspindel ausgestatteten Bearbeitungseinheit zur mechanischen Oberflächenbearbeitung auf, beispielsweise zur Aufnahme einer Bearbeitungseinheit zum Honen.

Der Ringtisch ist im unteren Säulenbereich um die Säule herum angeordnet und weist einen um eine vertikale Drehachse drehbaren Vorrichtungsträger zur Aufnahme mindestens einer Werkstückaufnahmevorrichtung auf. Bei fertig montierter Vorrichtung ist der Vorrichtungsträger lösbar an einem drehbaren Teil des Rundtischs, d.h. an dessen Rotor, befestigt. Zum Antrieb des Vorrichtungsträgers sind entsprechende Antriebseinrichtungen vorgesehen, wobei der Vorrichtungsträger bevorzugt NC-gesteuert angetrieben wird.

Bei der Vorrichtung trägt nicht die Säule, sondern die Maschinenbasis den überwiegenden Teil des Gewichts oder das gesamte Gewicht des Ringtisches. Somit braucht die Säule keine oder keine wesentliche Tragefunktion für den Ringtisch zu erfüllen und kann funktionsoptimiert und gegebenenfalls geringer dimensioniert gestaltet werden.

Des weiteren ermöglicht die Vorrichtung eine unabhängige und damit vereinfachte Montage von Ringtisch und Maschinenoberteil, denn der Rundtisch kann unabhängig vom Maschinenoberteil mit den daran befestigten Bearbeitungseinheiten auf der Maschinenbasis angeordnet, ausgerichtet und dort montiert werden. Somit ist es zur Montage und der präzisen Ausrichtung der Bearbeitungseinheiten zum Ringtisch nicht mehr erforderlich, zunächst den Ringtisch zu montieren und dessen tatsächliche Position zu bestimmen. Die aufwändige Ausrichtung von Ringtisch und Bearbeitungseinheiten zueinander, insbesondere in vertikaler Richtung, sowie die Montage des Ringtisches an der Säule des Maschinenoberteils können entfallen.

Gemäß der beanspruchten Erfindung weist die Säule an ihrer Außenseite mehrere, in unterschiedlichen Höhen horizontal verlaufende Ringnuten auf. Die Ringnuten dienen unter anderem als Einrichtung zur Ausnahme der Bearbeitungseinheiten und sind vorzugsweise umlaufend ausgebildet. Die umlaufenden Ringnuten ermöglichen die flexible Anordnung der Bearbeitungseinheiten unabhängig von einer festen Winkelteilung und in unterschiedlichen Höhen bzw. vertikalen Positionen relativ zum Vorrichtungsträger.

In einer Ausgestaltung der Erfindung weist die Maschinenbasis an ihrer Oberseite eine Basis-Bezugsfläche als gemeinsame vertikale Bezugsfläche für den Ringtisch und das Maschinenoberteil auf. Bevorzugt ist die Basis-Bezugsfläche eine Planfläche. Dabei sind der Ringtisch und das Maschinenoberteil jeweils mit ihren Unterseiten unmittelbar auf dieser Basis-Bezugsfläche angeordnet, wobei durch die Basis-Bezugsfläche sowohl die vertikale Position des Ringtisches als auch die vertikale Position des Maschinenoberteils bestimmt ist. Damit ist auch die Position des Ringtisches in vertikaler Richtung relativ zum Maschinenoberteil definiert.

Mittels der gemeinsamen Basis-Bezugsfläche kann auf einfache Art und Weise ein Bezug in vertikaler Richtung zwischen dem Ringtisch und dem Maschinenoberteil hergestellt werden und es wird eine einfache vertikale Ausrichtung von Ringtisch und Maschinenoberteil relativ zueinander ermöglicht. Bevorzugt bildet die Basis-Bezugsfläche der Maschinenbasis den einzigen Bezug zur vertikalen Ausrichtung des Ringtisches sowie des Maschinenoberteils.

Die gemeinsame Bezugsfläche ermöglicht, dass Ringtisch und Maschinenoberteil unabhängig voneinander vormontiert und anschließend unabhängig voneinander auf der Maschinenbasis angeordnet werden können, aber dennoch präzise zueinander ausgerichtet werden können. Der Ringtisch kann unabhängig von der Säule und den Bearbeitungseinheiten auf der Maschinenbasis angeordnet und mit dieser verbunden werden. Sind die Maschinenbasis und der Ringtisch vormontiert, braucht anschließend das Maschinenoberteil nur noch auf der Maschinenbasis angeordnet zu werden und mit dieser verbunden werden. Die vertikale Ausrichtung des Maschinenoberteils ist aufgrund der Basis-Bezugsfläche sehr einfach und die an die Vorrichtung gestellten Genauigkeitsanforderungen können mit deutlich reduziertem Aufwand erfüllt werden, insbesondere mit reduziertem Fertigungs- und Montageaufwand.

In einer Ausgestaltung ist das Maschinenoberteil mit der Säulenunterseite auf der Basis-Bezugsfläche der Maschinenbasis angeordnet und gelagert. Dazu weist die Säule eine Säulenunterseite auf, welche die Unterseite des Maschinenoberteils bildet. In diesem Fall bildet die Säulenunterseite eine Bezugsfläche des Maschinenoberteils. Vorzugsweise ist die Säulenunterseite ebenfalls eine Planfläche.

In einer anderen Ausgestaltung kann das Maschinenoberteil an seiner Unterseite auch eine Adaptereinrichtung mit einer Unterseite aufweisen, welche dann die Unterseite des Maschinenoberteils bildet. Dies kann insbesondere hinsichtlich einer Oberflächenbearbeitung der Unterseite bzw. der Bezugsfläche des Maschinenoberteils vorteilhaft sein, da unter Umständen eine einfachere Bearbeitung der Bezugsfläche des Maschinenoberteils möglich ist.

In einer vorteilhaften Ausgestaltung befindet sich die Säule vollständig oberhalb der Basis-Bezugsfläche und erstreckt sich nicht bis in einen Bereich unterhalb davon. Somit ist ein Bereich unterhalb der Basis-Bezugsfläche in der Maschinenbasis nicht durch einen Teil der Säule belegt und kann anderweitig genutzt werden, um z. B. Aggregate, wie beispielsweise Pumpen, Kompressoren, Steuerungen oder dergleichen unterzubringen.

In einer Weiterbildung der Erfindung weist die Maschinenbasis an ihrer Oberseite eine Bezugsplatte auf. Dabei bildet eine Oberseite der Bezugsplatte zumindest teilweise die Basis-Bezugsfläche. Insbesondere hinsichtlich der horizontalen Ausrichtung und/oder der vertikalen Positionierung der Basis-Bezugsfläche kann es vorteilhaft sein, wenn die Maschinenbasis eine Bezugsplatte aufweist. Vorzugsweise ist die Bezugsplatte dabei höhenverstellbar in der Maschinenbasis gelagert. Bevorzugt weist die Maschinenbasis Ausrichteinrichtungen auf, die eine exakte horizontale Ausrichtung der Bezugsplatte ermöglichen.

In einer Weiterbildung der Erfindung weist die Vorrichtung im unteren Säulenbereich zwischen dem Maschinenoberteil und dem Ringtisch eine Passung auf in radialer Richtung, also quer bzw. senkrecht zur Drehachse des Vorrichtungsträgers bzw. zu einer Säulen-Längsrichtung. Durch die Passung, die vorzugsweise durch eine Teilfläche innen am Ringtisch und eine Teilfläche außen an der Säule gebildet wird, kann ein radialer Bezug zwischen der Säule und dem Ringtisch bzw. zwischen dem Maschinenoberteil und der Maschinenbasis mit dem Ringtisch hergestellt werden. Unter einer Passung wird eine Verbindung bzw. eine Anordnung zweier ineinander greifender oder aneinander anstoßender Teile verstanden, wobei beide Teile das gleiche Nennmaß aufweisen, jedoch Lage und Größe ihrer Toleranzfelder des entsprechenden Maβes, in diesem Fall ihrer Durchmesser, unterschiedlich sein können.

In einer Ausgestaltung weist die Vorrichtung Passstifte auf, um den Ringtisch und/oder das Maschinenoberteil jeweils in radialer Richtung einfach und genau auf der Maschinenbasis positionieren und ausrichten zu können.

In einer Weiterbildung der Erfindung weisen der Ringtisch und/oder die Maschinenbasis auf ihrer Oberseite in unterschiedlichen radialen Abständen zur Drehachse des Ringtisches Ringnuten auf, die zur Aufnahme und/oder Positionierung der Werkzeugaufnahmevorrichtungen oder von anderen Komponenten ausgebildet sind. Vorzugsweise sind die Ringnuten umlaufend ausgebildet und verlaufen insbesondere kreisförmig bzw. ringförmig um die Drehachse des Rundtisches, so dass sie zur Aufnahme von Komponenten unabhängig von einer festen Winkeiteilung ausgebildet sind. Die Ringnuten können aber auch nur teilweise umlaufend ausgebildet sein. Bevorzugt sind die Ringnuten im Vorrichtungsträger und/oder der Maschinenbasis angeordnet, vorzugsweise weist die Bezugsplatte solche Ringnuten auf.

Mittels dieser Ringnuten kann auf einfache Art und Weise ein radialer Bezug der in diesen Ringnuten angeordneten bzw. von diesen aufgenommenen Komponenten zum Ringtisch bzw. zum Maschinenoberteil und damit auch indirekt zu den Bearbeitungseinheiten hergestellt werden. Durch die unterschiedlichen Abstände zur Drehachse können entsprechend unterschiedliche radiale Bezüge hergestellt werden. Die Ringnuten ermöglichen einen vereinfachten Aufbau und eine schnelle Montage von Komponenten, insbesondere von den Werkstückaufnahmevorrichtungen.

Alternativ oder zusätzlich können zur Herstellung radialer Bezüge der Rundtisch, insbesondere der Vorrichtungsträger, und/oder die Maschinenbasis, insbesondere die Bezugsplatte, auch Gewinde- und Passbohrungen oder dergleichen aufweisen.

In einer bevorzugten Ausführungsform ist der Vorrichtungsträger mehrteilig ausgebildet und weist mehrere Vorrichtungsträgerelemente auf, die einzeln und getrennt voneinander an einem drehbaren Teil des Ringtischs angeordnet und montiert werden können. Auf diese Weise sind ein flexibler Aufbau der Vorrichtung sowie ein schneller und einfacher Wechsel der Werkstückaufnahmevorrichtungen möglich. Die Werkstückaufnahmevorrichtungen können separat und unabhängig von einander außerhalb der Vorrichtung auf den einzelnen Vorrichtungsträgerelementen vormontiert werden. Zum Austauschen einer Werkstückaufnahmevorrichtung wird dann jeweils nur noch das zugehörige Vorrichtungsträgerelement mit der vormontierten Werkstückaufnahmevorrichtung ausgetauscht. Weisen die Vorrichtungsträgerelemente entsprechende Gewindebohrungen, Passbohrungen und/oder Ringnuten auf, können die Werkstückaufnahmevorrichtung bereits ausgerichtet vormontiert werden, insbesondere in radialer Richtung.

Die Vorrichtungsträgerelemente können in Form von Ringsegmenten vorliegen, die sich bei Bedarf zu einem vollständigen geschlossenen Vorrichtungsträgerring ergänzen bzw. kombinieren lassen, aber auch einzeln oder in kleinen Gruppen montiert werden können. Vorrichtungsträgerelemente können auch die Form einfacher Rechteckplatten oder andere Formen haben. Vorrichtungsträgerelemente sind in der Regel plattenförmige Elemente, das ist aber nicht zwingend.

In einer Weiterbildung weist das Maschinenoberteil oberhalb des oberen Säulenbereichs eine im Wesentlichen horizontal angeordnete Installationsplatte auf. Bevorzugt ist die Installationsplatte selbsttragend und zur Anordnung von Aggregaten ausgebildet. Vorzugsweise erstreckt sie sich in radialer Richtung über einen Bearbeitungsbereich, bei dem es sich um den Bereich handelt, der zur Anordnung der Bearbeitungseinheiten und der Bearbeitung der Werkstücke vorgesehen ist, hinaus. Auf der Installationsplatte können in einem Installationsbereich, der sich oberhalb dieser Installationsplatte befindet, für die Vorrichtung erforderliche Aggregate, beispielsweise Pumpen oder Kompressoren, angeordnet werden. Die Installationsplatte kann auch zur Führung und Lagerung von Türen und/oder Kabinenwänden ausgebildet sein.

Die Installationsplatte kann dabei entweder direkt auf der Säule selber angeordnet sein, oder aber auf einem Säulenaufsatz, der zur Verlängerung der Säule nach oben dient.

In einer vorteilhaften Ausgestaltung ist die Säule hohl ausgebildet und bildet einen Versorgungsschacht. Ist ein Säulenaufsatz vorhanden, so ist dieser ebenfalls vorzugsweise hohl. Mittels der hohlen Säule können Zuleitungen, wie beispielsweise elektrische Leitungen oder Versorgungsleitungen für Medien (Druckluft, Kühlschmierstoff oder dergleichen) von den im Installationsbereich angeordneten Aggregaten und/oder Komponenten in die Säule hinein und von innen her zu den an der Säule angeordneten Bearbeitungseinheiten geführt werden. Bei entsprechender Ausgestaltung der Vorrichtung mit eine Ausnehmung in der Oberseite der Maschinenbasis können die Leitungen auch durch die Säule hindurch geführt werden zu Komponenten, die unterhalb der Basisbezugsfläche bzw. unterhalb des Ringtischs in der Maschinenbasis angeordnet sind. Vorzugsweise ist der Innenraum der Säule dabei in mindestens zwei Schächte unterteilt, wovon insbesondere einer nur für die Leitungen zur Medienversorgung vorgesehen ist und einer nur für elektrische Leitungen. Bevorzugt sind die beiden Schächte durch eine Trennwand voneinander getrennt.

In einer bevorzugten Ausgestaltung weist die Vorrichtungen Einrichtungen zur Abdichtung gegen das Eindringen von Flüssigkeiten, Staub und/oder Spänen von oben aus dem Bearbeitungsbereich in den Bereich, der sich unterhalb der Basis-Bezugsfläche befindet, auf. Auf diese Weise kann der Bereich unterhalb der Basis-Bezugfläche als "Trockenbereich" klassifiziert werden.

Ist ein Bereich entsprechend abgedichtet, insbesondere gegen das Eindringen von Flüssigkeiten wie Kühlschmierstoffen oder Reinigungsflüssigkeiten, kann er als "Trockenbereich" klassifiziert werden, was Vorteile bietet bei der Auslegung der zur Anordnung in diesem Bereich vorgesehenen Aggregate und Komponenten hinsichtlich ihrer Schutzklassen.

In einer bevorzugten Ausgestaltung weist die Vorrichtung Einrichtungen zur Abdichtung gegen das Eindringen von Flüssigkeiten, Staub und/oder Spänen von unten aus dem Bearbeitungsbereich in den Installationsbereich auf. Entsprechend kann der Installationsbereich oberhalb der Installationsplatte dann ebenfalls als "Trockenbereich" klassifiziert werden.

Sind sowohl der Installationsbereich als auch der Bereich unterhalb der Basis-Bezugsfläche als "Trockenbereich" ausgelegt, ist lediglich der Bearbeitungsbereich "Nassbereich", wobei der Nassbereich nach oben durch die Installationsplatte begrenzt wird und nach unten durch die Maschinenbasis bzw. die Bezugsplatte.

In einer vorteilhaften Ausgestaltung ist auf der Oberseite der Installationsplatte eine vorzugsweise um die Drehachse schwenkbare bzw. drehbare Tragarmvorrichtung für ein Bedienfeld angeordnet.

In einer vorteilhaften Ausgestaltung weist die Vorrichtung auf der Oberseite der Installationsplatte eine Transportvorrichtung zum Transport des Maschinenoberteils und/oder der gesamten Vorrichtung auf. Diese ist vorzugsweise an der Installationsplatte befestigt und so ausgelegt, dass das Maschinenoberteil und/oder die gesamte Vorrichtung daran aufgenommen werden kann, beispielsweise mit Hilfe eines Krans.

Die vorgenannte Vorrichtung kann hergestellt werden, indem zunächst der Ringtisch auf der Maschinenbasis angeordnet und positioniert wird und in seiner Position auf der Maschinenbasis fixiert wird. Anschließend kann das Maschinenoberteil auf der Maschinenbasis angeordnet und positioniert werden und entsprechend in seiner Position fixiert werden. Der Ringtisch und das Maschinenoberteil können unabhängig voneinander, also quasi autark, auf der Maschinenbasis ausgerichtet und montiert werden. Damit ist auch eine unabhängige Vormontage von Ringtisch und Maschinenoberteil möglich.

Um einen defekten Ringtisch zu ersetzen oder den Antrieb des Ringtisches auszutauschen, ist es bei einer erfindungsgemäßen Vorrichtung nicht mehr erforderlich, die Säule mit den daran angeordneten Bearbeitungseinheiten und dem Ringtisch von der Maschinenbasis zu trennen, um überhaupt den Ringtisch von der Säule demontieren zu können und die entsprechenden Teile ersetzen zu können. Ferner kann durch die erfindungsgemäße Vorrichtung vermieden werden, dass beim erneuten Zusammenbau der Abstand der Ringtischebene zu den Bearbeitungseinheiten, und entsprechend der davon in vertikaler Richtung abhängige Abstand der Werkstückaufnahmevorrichtungen zum entsprechenden Bearbeitungswerkzeug, verändert wird.

Vorzugsweise wird der Ringtisch nach dem Fixieren seiner Position auf der Maschinenbasis mit der Maschinenbasis zu einem Maschinenunterbau zusammengefügt. Insbesondere wird der Ringtisch mit der Maschinenbasis verschraubt.

Bevorzugt wird das Maschinenoberteil, nachdem es in der richtigen Position auf der Maschinenbasis fixiert worden ist, mit dem Ringtisch und/oder der Maschinenbasis zusammengefügt, vorzugsweise verschraubt. Es ist nicht erforderlich, dass der Ringtisch mit dem Maschinenoberteil verbunden wird. Dies kann jedoch unter Umständen vorteilhaft sein.

Eine erfindungsgemäße Honmaschine ist als Ringtisch-Honmaschine ausgestaltet und umfasst mindestens eine mit einer Werkzeugspindel ausgestatteten Bearbeitungseinheit zum Honen sowie eine Vorrichtung. Die Bearbeitungseinheit ist an der Säule angebracht. Vorzugsweise trägt die Säule zwei oder mehr über den Umfang der Säule verteilte Bearbeitungseinheiten. Zusätzlich zu Bearbeitungseinheiten, die für das Honen eingerichtet sind, können auch andere Bearbeitungseinheiten, z.B. zum Entgraten vorgesehen sein. Weiterhin können zusätzliche Messeinheiten vorgesehen sein.

Ausführungsformen der Erfindung sind in den Zeichnungen schematisch dargestellt und werden im Folgenden näher erläutert.

### KURZBESCHREIBUNG DER ZEICHNUNGEN

- Fig. 1: zeigt in Schnittdarstellung ein Ausführungsbeispiel einer erfindungsgemäßen Ringtisch-Honmaschine;
- Fig. 2: zeigt einen in sechs Ringsegmente segmentierten Vorrichtungsträger aus Fig. 1 in Einzelteildarstellung;
- Fig. 3: zeigt einen Vorrichtungsträger mit drei Vorrichtungsträgerelementen in Form von Rechteckplatten, und
- Fig. 4: zeigt einen Ringtisch mit einem einzelnen Ringsegment als Vorrichtungsträger.

### DETAILLIERTE BESCHREIBUNG DER BEVORZUGTEN AUSFÜHRUNGSFORMEN

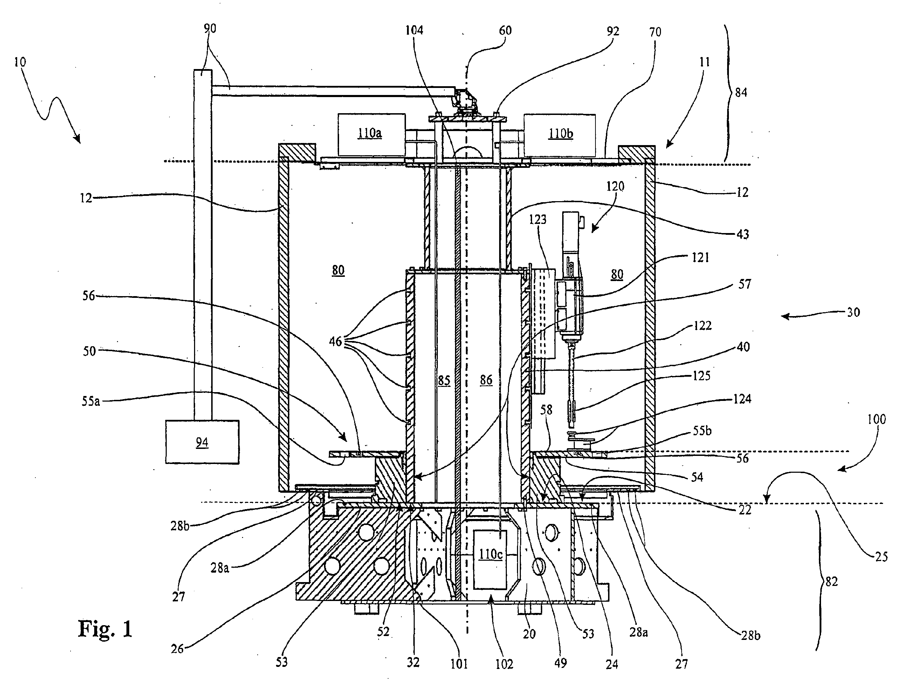

Fig. 1 zeigt in Schnittdarstellung ein Ausführungsbeispiel einer erfindungsgemäßen Ringtisch-Honmaschine 10 mit einer Vorrichtung 11 zum Honen. Die Vorrichtung 11 umfasst ein Maschinenoberteil 30 und einen Maschinenunterbau 100 mit einer Maschinenbasis 20 und einem Ringtisch 50. Das Maschinenoberteil 30 und der Ringtisch 50 sind jeweils mit ihren Unterseiten 32, 52 unmittelbar auf einer Oberseite 22 der Maschinenbasis 20 angeordnet und ortsfest auf der Maschinenbasis gelagert. Das auf der Maschinenbasis 20 angeordnete Maschinenoberteil 30 umfasst eine zylindrische, runde, hohle Säule 40 mit einer Säulenunterseite, welche als Bezugsfläche des Maschinenoberteils 30 dient und die Unterseite 32 des Maschinenoberteils 30 bildet.

Die Maschinenbasis 20 weist an ihrer Oberseite 22 eine ebene Basis-Bezugsfläche 24 auf, durch die sowohl die vertikale Position des Rundtisches 50 als auch die vertikale Position des Maschinenoberteils 30 bestimmt wird, so dass das Maschinenoberteil 30 relativ zum Ringtisch 50 vertikal ausgerichtet bzw. positioniert ist. Die Basis-Bezugsfläche 24 bildet dabei die einzige Bezugsfläche zur vertikalen Ausrichtung des Maschinenoberteils 30 relativ zum Rundtisch 50 und liegt in einer Bezugsebene 25. Die Basis-Bezugsfläche 24 trägt unabhängig von einander sowohl den Ringtisch 50 als auch das Maschinenoberteil 30. Zur vertikalen Ausrichtung des Maschinenoberteils 30 relativ zum Ringtisch 50 sind außer der Basis-Bezugsfläche 24 keine weiteren Bezugsflächen für den Grundaufbau der Vorrichtung 11 notwendig und vorgesehen.

Der Ringtisch 50 ist in einem unteren Säulenbereich ringförmig außen um die Säule 40 herum angeordnet. Der Ringtisch hat einen rotativ ruhenden Teil bzw. Stator 53 und einen gegenüber diesem Stator drehbaren rotierbaren Teil bzw. Rotor. Der Stator hat einen nach oben offenen, im Wesentlichen rechteckigen, U-förmigen Querschnitt. Der ringförmige Rotor schließt die obere Öffnung ab. Innerhalb der durch den Stator gebildeten U-förmigen umlaufenden Wanne sind unterhalb des Rotors u.a. der Antrieb für den Rotor, das Messsysten zur Bestimmung der Winkellage des Rotors, die Lager (Drehlager, radiale und axiale Lager) und Bremseinrichtungen untergebracht.

An der Oberseite des drehbaren Teils bzw. Rotors ist ein mehrteilig aufgebauter auswechselbarer Vorrichtungsträger 54 mittels Schrauben o. dgl. lösbar befestigt. Der Vorrichtungsträger ist zur Aufnahme von Werkstückaufnahmevorrichtungen 124 vorgesehen und kann bei fertig montierter Vorrichtung als Teil des Rundtischs angesehen werden.

Der Ringtisch 50 ist nicht an der Säule 40 aufgehängt, sondern wird ausschließlich von der Maschinenbasis 20 getragen bzw. "steht" quasi auf dieser. Der Vorrichtungsträger 54 ist am Rotor des Ringtischs befestigt, der mittels eines Drehlagers in Form eines Wälz- oder Gleitlagers gegenüber einem rotatorisch ruhenden Teil 53 des Ringtisches 50 drehbeweglich um eine vertikale Drehachse 60 gelagert. Vorteilhaft ist das Drehlager ein Präzisionsdrehlager, beispielsweise in Form eines Axialwälzlagers.

Zwischen der radialen Innenfläche des rotatorisch ruhenden Teils 53 des Ringtisches 50 und einer Außenfläche der Säule 40 im unteren Säulenbereich weist die Vorrichtung 11 eine Übergangspassung 57 auf, so dass der Ringtisch 50 in radialer Richtung relativ zum Maschinenoberteil 30 bzw. zur Säule 40 ausgerichtet ist. Unter der Übergangspassung 57 wird eine Passung verstanden, bei der sich aufgrund der Toleranzen sowohl ein Spiel als auch ein Übermaß ergeben kann. Vorzugsweise ist die Passung 57 zwischen Säule und Ringtisch in radialer Richtung eine h- oder H-Passung.

Die Säule 40 weist an ihrer Außenseite 44 in verschiedenen Höhen insgesamt fünf horizontal verlaufende und vollständig umlaufend ausgebildete Ringnuten 46 mit Ausfräsungen auf, die für das nachträgliche Einschieben von Befestigungselementen zur Aufnahme von Bearbeitungseinheiten ausgebildet sind. In Fig. 1 ist beispielhaft eine Bearbeitungseinheit 120 von mehreren Bearbeitungseinheiten zum Innenrundhonen dargestellt.

Die Bearbeitungseinheit 120 ist innerhalb eines Bearbeitungsbereichs 80 angeordnet und weist eine Honspindel 122 mit einem Honwerkzeug zum Innenrundhonen mit radial verstellbaren Honleisten 125 auf. Ferner umfasst die Bearbeitungseinheit 120 ein Honspindelgehäuse 121 mit einem integrierten Antrieb zur Erzeugung einer Rotationsbewegung der Honspindel 122 bzw. des Honwerkzeugs um seine Längsachse. Zur Erzeugung einer Hubbewegung des Honwerkzeugs 122 in Längsrichtung ist ein Linearantrieb 123 vorgesehen. Zur Aufnahme der zu bearbeitenden Werkstücke ist auf dem Vorrichtungsträger 54 eine Werkstückaufnahmevorrichtung 124 befestigt.

Die außen an der Säule 40 eingebrachten Ringnuten 46 ermöglichen eine freie Einteilung bzw. Anordnung der Bearbeitungseinheiten in Umfangsrichtung mit flexibel gestaltbarer Winkelteilung. Dies bedeutet, dass flexibel die Anzahl der Bearbeitungseinheiten variiert werden kann und trotzdem ein gleichmäßiger Taktbetrieb mit gleichmäßigen Winkelversätzen möglich ist. Beispielsweise können drei Bearbeitungseinheiten am Umfang der Säule angeordnet werden, jeweils mit einem Winkelversatz von 120° dazwischen oder auch fünf Bearbeitungseinheiten mit jeweils einem Winkelversatz von 72°. Des weiteren ist der Einbau in unterschiedlichen Höhen bzw. unterschiedlichen Positionen in vertikaler Richtung ebenso möglich, wie auch die Verwendung von Bearbeitungseinheiten unterschiedlicher Länge. Zwischen zwei Bearbeitunseinheiten ist eine nicht dargestellte Messeinheit vorgesehen.

Durch die gemeinsame Basis-Bezugsfläche 24 kann der Ringtisch 50 unabhängig von dem Maschinenoberteil 30 mit der Säule 40 und der daran befestigten Bearbeitungseinheit 120 auf der Maschinenbasis 20 montiert werden. Entsprechend kann das Maschinenoberteil 30 separat montiert werden. Insbesondere kann die Bearbeitungseinheit 120 unabhängig vom Ringtisch an der Säule 40 montiert werden. Bei deren Montage ist nur ein vertikaler Bezug zur Säulenunterseite bzw. zur Unterseite 32 des Maschinenoberteils 30 herzustellen, jedoch kein direkter vertikaler Bezug zum Ringtisch 50. Dieser ergibt sich beim Zusammenbau der Vorrichtung 11 automatisch.

Die Maschinenbasis 20 weist eine planparallele Bezugsplatte 26 auf, deren Oberseite die Basis-Bezugsfläche 24 bildet. Dazu ist die Oberseite der Bezugsplatte 26 derart bearbeitet, dass es sich bei der Basis-Bezugsfläche 24 um eine Planfläche handelt. An der Oberseite der Bezugsplatte 26 ist in radialer Richtung mit definiertem Abstand zur Drehachse 60 und zur Säule 40 nach außen eine Ringnut 28a eingebracht, die weitere, radial bezogene Einbauten unterhalb des Vorrichtungsträgers 54 ermöglicht. Dabei dient die Ringnut 28a als Positionier- bzw. Ausrichthilfe.

Die in Fig. 1 dargestellte Vorrichtung 11 weist eine weitere Platte bzw. eine Ringplatte 27 auf, die ebenfalls auf der Maschinenbasis 20 ortsfest gelagert ist. Diese erstreckt sich in radialer Richtung nach außen über die Bezugsplatte 26 hinaus und weist ebenfalls Ringnuten 28b auf, die ebenfalls zur Herstellung weiterer radialer Bezüge zur vertikalen Drehachse 60 dienen. Die Ringplatte 27 ist jedoch nicht in der gleichen Ebene angeordnet wie die Bezugsplatte 26, sondern nach oben zu dieser versetzt. Durch diese stufenförmige Anordnung ist es möglich, auf einfache Art und Weise an vordefinierten Positionen sowohl in vertikaler Richtung als auch in radialer Richtung Einrichtungen zur Aufnahme von Komponenten zu schaffen. Zur Optimierung des Rohstoffeinsatzes und einer Reduktion der Fertigungsschritte kann die Bezugsplatte 26 gemeinsam mit der Ringplatte 27 aus einem einzigen Halbzeug hergestellt werden, wobei die Bezugsplatte 26 einen Innenring zu der Ringplatte 27 bildet.

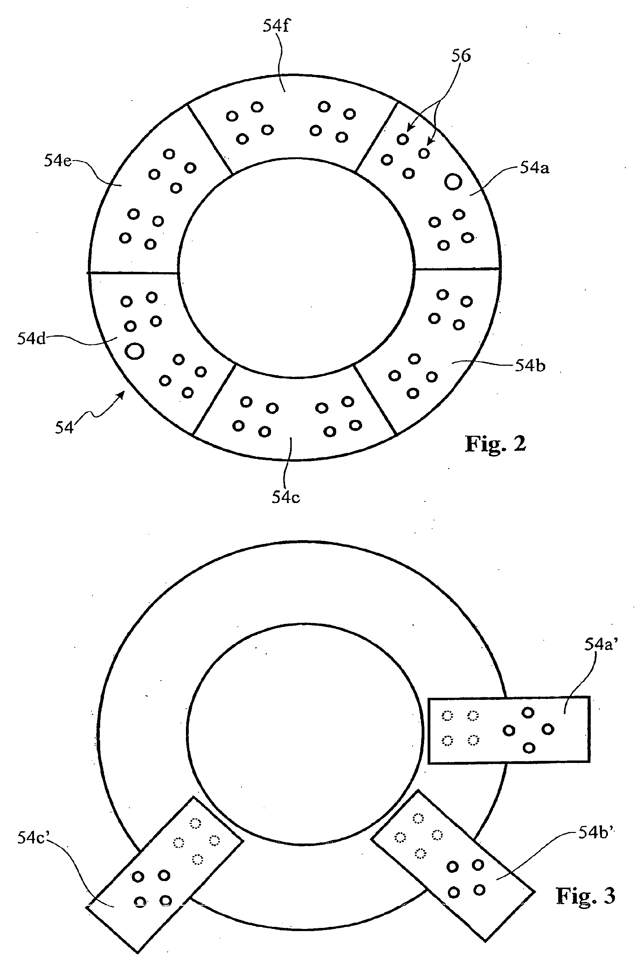

In der Oberseite des Vorrichtungsträgers 54 des Ringtisches 50 sind Einrichtungen 56 für eine einfache Positionierung von Komponenten in radialer Richtung in einer vordefinierten radialen Position eingebracht (siehe Fig. 2). Die Einrichtungen 56 sind zur Aufnahme der Werkstückhaltevorrichtungen ausgebildet. Im Beispielsfall hat jede der Einrichtungen vier in einem quadratischen Bohrmuster liegende Gewindebohrungen und Passbohrungen für eine vordefinierte Anordnungsposition von Komponenten auf dem Vorrichtungsträger 54.

Fig. 2 zeigt einen mehrteilig ausgebildeten, segmentierten Vorrichtungsträger 54, der sechs Einzelplatten bzw. Ringsegmente 54a bis 54f aufweist, die sich zu einem Ring ergänzen. Die Ringsegmente sind jeweils separat montierbar und können mit geringen Herstellkosten gefertigt werden. Die Ringsegmente 54a bis 54e können auch in weitere Segmente unterteilt sein. Der insgesamt ringförmige Vorrichtungsträger kann z.B. als zweiteiliger, dreiteiliger, vierteiliger sechsteiliger oder zwölfteiliger Ring ausgestaltet sein. Ferner ist denkbar, auf dem Vorrichtungsträger 54 bzw. auf einem der Segmente des Vorrichtungsträgers 54a bis 54f ein weiteres Segment bzw. einen zweiten Vorrichtungsträger radial versetzt anzuordnen. Jedes Segment hat in Beispielsfall zwei quadratische Bohrbilder.

Durch eine spezielle Anordnung von Gewinde- und Passbohrungen im Rotor des Ringtischs 50, vergleichbar mit den Passbohrungen 55a und 55b im Vorrichtungsträger 54, kann jedes Ringsegment 54a bis 54f unabhängig von den anderen montiert oder demontiert werden. Über Passbohrungen im Ringtisch 50 sind die radialen Bezüge zum Maschinenoberteil 30, insbesondere zur Bearbeitungseinheit 120 definiert. Die Bezüge bleiben auch dann, wenn der Vorrichtungsträger 54 mit der darauf angeordneten Werkstückaufnahmevorrichtung 124 ausgetauscht wird, erhalten bzw. können einfach wieder hergestellt werden. Indem nicht nur die Werkstückaufnahmevorrichtung 124, sondern der Vorrichtungsträger 54 bzw. das zur Werkstückaufnahmevorrichtung 124 zugehörige Ringsegment 54b ausgetauscht wird, können Vorrichtungswechsel einfach und ohne Aufwand vorgenommen werden. Somit können die Werkstückaufnahmevorrichtungen je nach Anwendungsfall einfach und schnell gewechselt werden.

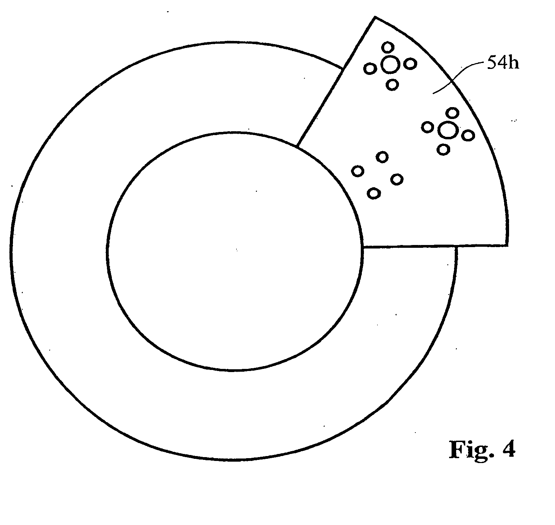

Die Figuren 3 und 4 zeigen beispielhaft andere Ausführungsformeh von mehrteiligen Vorrichtungsträgern. Fig. 3 zeigt einen Vorrichtungsträger mit drei Vorrichtungsträgerelementen in Form von Rechteckplatten 54a', 54b', 54c', die sehr einfach und kostengünstig herstellbar sind und jeweils eine Gruppe von Bohrungen aufweist, um eine Werkstückhaltevorrichtung oder eine andere Einrichtung darauf zu befestigen. Selbstverständlich können auch weniger oder mehr als drei Rechteckplatten andere oder polygonale Platten in gleichmäßiger oder ungleichmäßiger Teilung vorgesehen sein. Eine geschlossene Ringform des Vorrichtungsträgers, wie in Fig. 2 gezeigt, ist nicht erforderlich. Fig. 4 zeigt einen Ringtisch mit einem einzelnen Ringsegment 54h als Vorrichtungsträger, wobei auf dem Ringsegment mehrere, z.B. zwei, Werkstückhaltevorrichtungen befestigt werden können.

Zum Antrieb des Vorrichtungsträgers 54 weist der Ringtisch 50 einen hier nicht dargestellten Antrieb auf, der entweder als getakteter Antrieb ausgebildet sein kann oder als NC-Direktantrieb, d.h. als stufenloser, gesteuerter bzw. geregelter Antrieb, der jede beliebige Position bzw. jede Winkelposition anfahren kann. Bevorzugt ist ein Direktantrieb mit einem Torquemotor vorgesehen, der in beide Drehrichtungen drehbeweglich ist und auch unter hohen Lasten den am Rotor des Ringtischs befestigten Vorrichtungsträger 54 schnell drehen und präzise positionieren kann. Zur Positionsrückmeldung der Drehstellung und zur Bereitstellung von Positionssignalen als Regelgröße im elektrischen Regelkreis ist ein direktes Wegmesssystem vorteilhaft. Zur Positionssicherung im stromlosen Zustand ist eine pneumatische Notfallbremse vorgesehen, die im stromlosen Zustand schließt und damit den Vorrichtungsträger 54 in seiner Position fixiert. Das Wegmesssystem des Ringtisches 50 ist im Stator des Ringtischs derart angeordnet, dass es im eingebauten Zustand von außen zugänglich ist und so eine einfache Kalibrierung ermöglicht. Auch die pneumatischen Bremsen sind im eingebauten Zustand von außen zugänglich und ermöglichen so eine einfache Wartung. Des weiteren kann der Ringtisch 50 mechanische Stillstandsbremsen in redundanter Ausführungen aufweisen. Vorzugsweise ist eine Kühlmittelverteilung sowie eine Schmierstoffverteilung im Ringtisch 50 integriert.

Mit Hilfe dieses Antriebskonzept ist u.a. ein getakteter Betrieb im Volltakt möglich, bei dem pro Takt eine Werkstückhaltevorrichtung von einer Bearbeitungsstation zur nächsten Bearbeitungsstation oder einer Messstation oder ähnlichem transportiert wird. Weiterhin kann in entsprechender Konstellation auch ein Vorrichtungswechsel dadurch erreicht werden, dass nicht nur die zur Zahl von Bearbeitungsstationen passende Zahl von gleichartigen ersten Werkstückhaltevorrichtungen montiert wird, sondern z.B. in einem Halbtakt versetzt dazwischen zweite Werkstückhaltevorrichtungen, die einen anderen Typ von Werkstücken oder den gleichen Typ in einer anderen Aufspannung tragen und sich insoweit von den ersten Werkstückhaltevorrichtungen unterscheiden. Hierdurch können z.B. Umrüstzeiten für andere Werkstücke erheblich verkürzt werden. Es können auch Mehrfachtakte in beliebigen Winkelabständen gefahren werden. Wenn zwei Bearbeitungsspindeln an einer Bearbeitungsposition vorgesehen sind, kann beispielsweise im Doppeltakt gefahren werden. Die Drehrichtung kann jeweils automatisch so gewählt werden, dass zum Erreichen der nächsten Stillstandposition der kleinstmögliche Winkelvorschub vorgenommen wird. So kann z.B. der kürzeste Winkelvorschub bis zu einer Kalibrierposition gefahren werden. Die Taktzeitoptimierung wirkt sich positiv auf die Produktivität aus.

Des weiteren können auch hier nicht dargestellte Antriebseinrichtungen zum Antrieb der zu bearbeitenden Werkstücke vorgesehen sein, so dass die Werkstücke während der Bearbeitung beispielsweise um ihre eigene Achse rotierend bewegt werden können. Dazu können beispielsweise Werkstückspindeln vorgesehen werden, die vorzugsweise unterhalb des Vorrichtungsträgers 54 angeordnet werden. Die Werkstückaufnahmevorrichtungen können auch als Wende- und/oder Schwenkeinrichtungen ausgebildet sein und die Bearbeitung eines Werkstücks mit nur einer Aufspannung in verschiedenen Positionen ermöglichen. Die in Fig. 1 dargestellte Werkstückaufnahmevorrichtung 124 ist jedoch zur ruhenden Aufnahme eines Werkstücks ausgebildet.

Im Maschinenunterbau 100 bzw. der Maschinenbasis 20 sind Bohrungen für Leitungsdurchführungen, Gewindereihen etc. eingebracht, die bereits vor dem Zusammenbau der Maschinenbasis 20 hergestellt werden können. Um die Kosten und den Fertigungsaufwand zu reduzieren, sind bis auf die Bezugsplatte 26 mit der Basis-Bezugsfläche 24 die Einzelteile der Maschinenbasis, wie beispielsweise eine Grundplatte 101, nicht nachbearbeitet. Da der Bezug in vertikaler Richtung für den Aufbau der Maschine einzig durch die Basis-Bezugsfläche 24 gebildet wird, kann auf eine Vielzahl von Bearbeitungsschritten und anderen technischen Bezügen zur Ausrichtung bzw. Positionierung der einzelnen Bauteile zueinander verzichtet werden.

Durch die Anordnung des Maschinenoberteils 30 auf der Basis-Bezugsfläche 24 anstelle einer sich von der Grundplatte 101 nach oben hin erstreckenden Säule wird unterhalb der Bezugsplatte 26 in der Maschinenbasis 20 ein Bauraum 102 geschaffen, der den Bereich unterhalb der Säule enthält und der zur Anordnung von Aggregaten und/oder Komponenten 110c wie beispielsweise Druckluftaggregaten oder Pumpen genutzt werden kann.

Durch die Anordnung von hier nicht dargestellten Einrichtungen zur Abdichtung gegen das Eindringen von Flüssigkeit, Staub und/oder Späne in einen Bereich 82 unterhalb der Basis-Bezugsfläche 24, kann dieser Bereich 82 "trocken" gehalten werden und damit bei entsprechender Ausgestaltung der Abdichtungseinrichtungen als Trockenraum klassifiziert werden. Dies ist insbesondere zur Anordnung elektrischer Aggregate 110c vorteilhaft, da die Anforderung an die Schutzklassen dieser Aggregate 110c somit reduziert werden können.

Der Bearbeitungsbereich 80 hingegen ist als Nassbereich nutzbar, so dass Medien wie Kühlschmierstoffe, Reinigungsflüssigkeiten, Spülflüssigkeiten etc. verwendet werden können. Eine Trennung in Nass- und Trockenraum ist insbesondere vorteilhaft hinsichtlich der Anordnung von elektrischen Aggregaten und Komponenten 110a bis 110c. Da sich der Ringtisch 50 im Bearbeitungsbereich 80 und damit im Nassbereich befindet, ist er speziell abgedichtet und erfüllt die Anforderungen hinsichtlich der Schutzklassen nach Schutzart IP 67.

Das in Fig. 1 dargestellte Ausführungsbeispiel weist oberhalb der Säule 40 einen ebenfalls runden, hohl ausgebildeten Säulenaufsatz 43 zur Vergrößerung der Maschinenhöhe auf, insbesondere zur Verlängerung des Bearbeitungsbereiches 80 nach oben. Durch den Säulenaufsatz 43 kann die erforderliche Höhe des Bearbeitungsbereichs 80 auf einfache und kostengünstige Art und Weise angepasst werden. Die Außen- und Innenflächen des Säulenaufsatzes 43 müssen ebenfalls nicht unbedingt bearbeitet werden, da keine speziellen Anforderungen an deren Oberflächenbeschaffenheit bestehen. Hingegen ist es bei der Säule 40 erforderlich, die Ringnuten einzubringen und gegebenenfalls die Oberfläche für einen festen Sitz der Bearbeitungseinheiten entsprechend vorzubearbeiten. Wird die fehlende Höhe über den Säulenaufsatz 43 ausgeglichen, können mit geringen Kosten verschiedene Maschinenhöhen realisiert werden, da es nicht mehr erforderlich ist, für unterschiedliche Maschinenhöhen unterschiedliche aufwendig zu bearbeitende Säule 40 bereitzuhalten.

Auf dem Säulenaufsatz 43 ist eine Installationsplatte 70 montiert, auf der Aggregate und Komponenten 110a und 110b installiert werden können. Die Installationsplatte 70 trennt einen oberhalb der Installationsplatte 70 befindlichen Installationsbereich 84 vom darunterliegenden Bearbeitungsbereich 80. Der Installationsbereich 84 bietet Raum für elektrische und pneumatische Aggregate und Komponenten 110a und 110b sowie für Einbauten von Medienzuführungen etc. und Kabelverlegungen und einen Zugang von oben in die Säule 40 und den Säulenaufsatz 43. Der Installationsbereich 84 kann ebenfalls als Trockenbereich ausgebildet werden, indem entsprechende Einrichtungen zur Abdichtung gegen Flüssigkeiten, Staub und/oder Späne, die aus dem Bearbeitungsbereich 80 in den Installationsbereich 84 eintreten könnten, vorgesehen werden.

Die Säule 40 sowie der Säulenaufsatz 43 sind innen hohl und als Versorgungsschacht 85, 86 ausgebildet, so dass die gesamte Energiezuführung der Maschine grundsätzlich von oben erfolgen kann, und zwar mit einem gemeinsamen Zugang radial seitlich innerhalb des Installationsbereichs 84 und von dort durch die Säule 40 hindurch nach unten in den Trockenbereich 82 unterhalb der Basis-Bezugsfläche 24 zu den dort angeordneten Aggregaten und Komponenten110c. Entsprechend können Abzweigungen zu weiteren Komponenten in radialer Richtung erfolgen, die an der Außenseite 44 der Säule 40 im oberen Säulenbereich 42 angeordnet sein können, beispielsweise zum Ringtisch 50 oder zur Bearbeitungseinheit 120. Innerhalb der Säule 40 kann eine Trennwand 104 eingebracht sein, die den Versorgungsschacht in einen Schacht zur Anordnung elektrischer Zuleitungen 85 und in einen Schacht 86 zur Medienzu- und abführung auftrennt. Diese Teilung kann sich auch im Installationsbereich 84 oberhalb der Installationsplatte 70 oder auch im Bereich 82 unterhalb der Basis- Bezugsfläche 24 wieder finden.

An der Oberseite der Installationsplatte 70 ist eine Transportvorrichtung 92 bzw. eine Anhängevorrichtung befestigt, mit der das gesamtem Maschinenoberteil 30 aufgenommen und transportiert werden kann bzw. die gesamte Vorrichtung 10, beispielsweise mittels eines Krans. Des weiteren ist bei dem dargestellten Ausführungsbeispiel an der Installationsplatte 70 bzw. an der Transportvorrichtung 92 eine Tragarmvorrichtung 90 angeordnet, die zur Aufnahme eines Bedienfeldes 94 vorgesehen ist. Mittels dieser Tragarmvorrichtung 90 kann das Bedienfeld 94 um die vertikale Drehachse 60 um nahezu 330° um die Maschine herumgeschwenkt werden.

Die Installationsplatte 70 ist als selbsttragende Konstruktion ausgeführt und ferner zur Aufnahme und Anordnung von Kabinenverkleidungen und/oder Türen 12 ausgebildet. Dabei werden die Türen 12 an der Installationsplatte 70 eingehängt bzw. aufgehängt und geführt. Es kann vorteilhaft sein, im Unterbau zusätzliche Führungselemente gegen ein Pendeln der Türen 12 vorzusehen. Die Gewichtskräfte der Türen 12 wird jedoch vorzugsweise durch die Installationsplatte 70 aufgenommen.

Die Türen 12, insbesondere im Fall von Schutztüren, sind dabei derart innerhalb der Vorrichtung 11 angeordnet, dass ihr Führungssystem und ihre Steuerung im Installationsbereich 84, der als Trockenbereich klassifiziert ist, angeordnet sind. Eines der Segmente kann als Beladestation vorbereitet sein, so dass die Honmaschine an unterschiedliche Handlingsysteme zur Werkstückzufuhr und ―abfuhr, z.B. an ein Robotersystem, einfach angepasst werden kann.

Entsprechend kann bei ausreichender Dimensionierung der Vorrichtung 11 die gesamte Vorrichtung mittels dieser Transportvorrichtung transportiert werden.

Die Tragarmvorrichtung 90 für das Bedienfeld 94 ist zentrisch auf der Installationsplatte 70, bevorzugt im Bereich der vertikalen Drehachse 60, angeordnet. Durch den Schwenkarm wird dem Bediener eine vollständige und umlaufende Einsicht und Bedienbarkeit der Maschine ermöglicht, insbesondere bei durchsichtigen Türen 12 bzw. Kabinenverkleidungen, die den Bearbeitungsbereich 80 seitlich nach außen begrenzen.

Bei der Montage der Vorrichtung 11 wird zunächst die Bezugsplatte 26 mit der Basisbezugsfläche 24 hergestellt und diese auf der Maschinenbasis 20 angeordnet und entsprechend ausgerichtet, insbesondere hinsichtlich ihrer Höhe in vertikaler Richtung und ihrer Neigung zur Horizontalen. Hierzu können auch spezielle Ausrichtmittel vorgesehen sein, die bei dem gezeigten Ausführungsbeispiel nicht dargestellt sind. Anschließend kann der Ringtisch 50 auf der Maschinenbasis 20 mit seiner Unterseite 52, welche die Bezugsfläche des Ringtisches 50 bildet, angeordnet werden. Ist die Basis-Bezugsfläche 24 ausgerichtet und der Ringtisch 50 entsprechend der vorgegebenen Toleranzen gefertigt, ist damit der Ringtisch 50 automatisch relativ zur Maschinenbasis 20 in vertikaler Richtung ausgerichtet. Die radiale Ausrichtung bzw. der radiale Bezug zur vertikalen Drehachse 60 bzw. der Längsachse der Vorrichtung 11 kann mittels Passstiften auf einfache Art und Weise hergestellt werden.

Ist der Ringtisch 50 entsprechend positioniert, wird seine Position auf der Maschinenbasis 20 fixiert und er wird mit der Maschinenbasis 20 zum Maschinenunterbau 100 zusammengefügt, beispielsweise verschraubt. Anschließend kann das fertig vormontierte Maschinenoberteil 30 mit der Säule 40, der Installationsplatte 70, auf der Installationsplatte 70 angeordneten Aggregaten/Komponenten 110a und 110b sowie an der Säule 40 angeordneten Bearbeitungseinheiten als kompletter Zusammenbau auf dem Maschinenunterbau 100 angeordnet werden. Die Unterseite 32 des Maschinenoberteils 30 ist dabei die entsprechende Bezugsfläche für die vertikale Positionierung des Maschinenoberteils 30 relativ zum Maschinenunterbau 100 und wird entsprechend auf der Basis-Bezugsfläche 24 angeordnet. Die radiale Ausrichtung bzw. der radiale Bezug des Maschinenoberteils bzw. der Säule zur Drehachse 60 des Ringtisches 50 kann ebenfalls mittels Passstiften 49 auf einfache Art und Weise hergestellt werden.

Vorzugsweise sind sämtliche Leitungen, Zuleitungen, Zuführungen sowohl im Maschinenunterbau 100 als auch im Maschinenoberteil 30 vormontiert und in der jeweiligen Trennebene mit Schnellkupplungen versehen, so dass nach den Anordnen des Maschinenoberteils 30 auf dem Maschinenunterbau 100 die entsprechenden Leitungen mit ihren Gegenstücken nur noch mittels der Schnellkupplungen zusammengekoppelt werden müssen. Dies ermöglicht einen sehr einfachen und schnellen Aufbau der Vorrichtung 10, insbesondere hinsichtlich der Ausrichtung und Positionierung der einzelnen Komponenten zueinander. Entsprechend einfach können auch Reparaturen bewerkstelligt werden. Insbesondere können Reparaturen am Ringtisch 50 einfach und schnell durchgeführt werden. Bis auf die Antriebseinheit des Ringtisches 50 können sämtliche Komponenten des Ringtisches 50 im eingebauten Zustand ausgetauscht bzw. gewartet werden. Um den Antrieb des Ringtisches 50 auszutauschen, muss der Ringtisch 50 aus der Vorrichtung 11 ausgebaut werden. Dazu müssen lediglich die Montageabläufe umgekehrt werden und es muss zunächst das Maschinenoberteil 30 vom Maschinenunterbau 100 abgenommen werden. Dazu müssen die Leitungen, Zuführungen etc. entsprechend an ihren Schnellkopplungen getrennt werden und die Säule von der Maschinenbasis 20 gelöst werden. Anschließend kann das Maschinenoberteil 30 von der Maschinenbasis 20 abgehoben werden, beispielsweise mittels eines Krans in Verbindung mit der Transportvorrichtung 92. Dann liegt der Ringtisch 50 frei und kann repariert und/oder ausgetauscht werden. Nach der Reparatur können auf einfache Art und Weise die gleichen Bezüge hergestellt werden wie zuvor (zumindest bei einer Reparatur des Ringtisches).

## Patentansprüche

1. Honmaschine (10) mit mindestens einer mit einer Werkzeugspindel (122) ausgestatteten Bearbeitungseinheit (120) zum Honen, wobei die Honmaschine als Ringtisch-Honmaschine (10) ausgebildet ist und eine Vorrichtung (11) zur mechanischen Oberflächenbearbeitung von Werkstücken aufweist, die umfasst:
- eine Maschinenbasis (20) mit einer Oberseite (22),
- ein Maschinenoberteil (30) mit einer Unterseite (32), wobei das Maschinenoberteil (30) eine vertikale Säule (40) aufweist, die in einem oberen Säulenbereich an ihrer Außenseite Einrichtungen (46) zur Aufnahme mindestens einer mit einer Werkzeugspindel (122) ausgestatteten Bearbeitungseinheit (120) zur mechanischen Oberflächenbearbeitung aufweist, und
- einen Ringtisch (50) mit einer Unterseite (52), wobei der Ringtisch (50) in einem unteren Säulenbereich um die Säule (40) herum angeordnet ist und einen um eine vertikale Drehachse (60) drehbaren Vorrichtungsträger (54) zur Aufnahme mindestens einer Werkstückaufnahmevorrichtung (124) aufweist,
wobei der Ringtisch (50) und das Maschinenoberteil (30) jeweils mit ihrer Unterseite (52, 32) auf der Oberseite (22) der Maschinenbasis (20) angeordnet und ortsfest auf der Maschinenbasis (20) gelagert sind und wobei die Säule (40) außen mehrere, in unterschiedlichen Höhen horizontal verlaufende Ringnuten (46) als Einrichtung zur Aufnahme der Bearbeitungseinheiten (120) aufweist.

2. Honmaschine nach Anspruch 1, **dadurch gekennzeichnet, dass** die Ringnuten (46) umlaufend ausgebildet sind.

3. Honmaschine (10) nach Anspruch 1 oder 2, **dadurch gekennzeichnet, dass** die Maschinenbasis (20) an ihrer Oberseite (22) eine Basis-Bezugsfläche (24) aufweist und der Ringtisch (50) und das Maschinenoberteil (30) jeweils auf der Basis-Bezugsfläche (24) angeordnet sind.

4. Honmaschine (10) nach Anspruch 1, 2 oder 3, **dadurch gekennzeichnet, dass** das Maschinenoberteil (30) mit einer Säulenunterseite auf der Basis-Bezugsfläche (24) der Maschinenbasis (20) angeordnet und gelagert ist, wobei die Säule (40) dazu eine Säulenunterseite aufweist, welche die Unterseite (32) des Maschinenoberteils (30) bildet.

5. Honmaschine (10) nach einem der vorgenannten Ansprüche, **dadurch gekennzeichnet, dass** die Maschinenbasis (20) an ihrer Oberseite (22) eine Bezugsplatte (26) aufweist und eine Oberseite der Bezugsplatte (26) zumindest teilweise die Basis-Bezugsfläche (24) bildet.

6. Honmaschine (10) nach einem der vorgenannten Ansprüche, **dadurch gekennzeichnet, dass** die Vorrichtung (11) zwischen dem Maschinenoberteil (30) und dem Ringtisch (50) eine Passung (57) in Radialrichtung aufweist, insbesondere eine Übergangspassung.

7. Honmaschine (10) nach einem der vorgenannten Ansprüche, **dadurch gekennzeichnet, dass** der Ringtisch (50) und/oder die Maschinenbasis (20) in unterschiedlichen radialen Abständen zur Drehachse (60) Einrichtungen zur Aufnahme und/oder Positionierung von Komponenten aufweist.

8. Honmaschine (10) nach einem der vorgenannten Ansprüche, **dadurch gekennzeichnet, dass** der Vorrichtungsträger (54) mehrteilig aufgebaut ist und mehrere Vorrichtungsträgerelemente (54a - 54f) aufweist, die vorzugsweise als Ringsegmente oder Rechteckplatten gestaltet sind.

9. Honmaschine (10) nach einem der vorgenannten Ansprüche, **dadurch gekennzeichnet, dass** das Maschinenoberteil (30) oberhalb des oberen Säulenbereichs eine Installationsplatte (70) zur Anordnung von Aggregaten aufweist, wobei sich die Installationsplatte (70) vorzugsweise in radialer Richtung über einen Bearbeitungsbereich (80) hinaus erstreckt, wobei der Bearbeitungsbereich (80) der Bereich ist, der zur Anordnung der Bearbeitungseinheiten (120) und der Bearbeitung der Werkstücke vorgesehen ist.

10. Honmaschine (10) nach einem der vorgenannten Ansprüche, **dadurch gekennzeichnet, dass** die Säule (40) hohl ist.

11. Honmaschine (10) nach einem der vorgenannten Ansprüche, **dadurch gekennzeichnet, dass** die Vorrichtung (11) Einrichtungen zur Abdichtung aufweist gegen das Eindringen von Flüssigkeiten, Staub und/oder Spänen von oben aus dem Bearbeitungsbereich (80) in einen Bereich (82), der sich unterhalb der Basis-Bezugsfläche (24) befindet.

12. Honmaschine (10) nach einem der Ansprüche 9 bis 11, **dadurch gekennzeichnet, dass** die Vorrichtung (11) Einrichtungen zur Abdichtung aufweist gegen das Eindringen von Flüssigkeiten, Staub und/oder Spänen von unten aus dem Bearbeitungsbereich (80) in einen Bereich (84), der sich oberhalb der Installationsplatte (70) befindet.

13. Honmaschine (10) nach einem der Ansprüche 9 bis 12, **dadurch gekennzeichnet, dass** an der Installationsplatte (70) eine Tragarmvorrichtung (90) für ein Bedienfeld (94) angeordnet ist und/oder dass an der Installationsplatte (70) eine Transportvorrichtung (92) zum Transport des Maschinenoberteils (30) und/oder der gesamten Vorrichtung (11) befestigt ist.

14. Honmaschine (10) nach einem der vorgenannten Ansprüche, **dadurch gekennzeichnet, dass** die Säule zwei oder mehr über den Umfang der Säule verteilte Bearbeitungseinheiten trägt, wobei vorzugsweise zusätzlich zu Bearbeitungseinheiten, die für das Honen eingerichtet sind, mindestens eine andere Bearbeitungseinheit und/oder eine Messeinheit vorgesehen ist.

## Claims

1. Honing machine (10) with at least one machining unit (120) for honing that is equipped with a tool spindle (122), the honing machine being formed as an annular-table honing machine (10) and having a device (11) for the mechanical surface machining of workpieces, which device comprises:
- a machine base (20) with an upper side (22),
- an upper machine part (30) with an underside (32),
the upper machine part (30) having a vertical column (40), which has on its outer surface in an upper column region devices (46) for receiving at least one machining unit (120) for mechanical surface machining that is equipped with a tool spindle (122), and
- an annular table (50) with an underside (52), the annular table (50) being arranged around the column (40) in a lower column region and having a device carrier (54), which is rotatable about a vertical axis of rotation (60), for receiving at least one workpiece receiving device (124),
the annular table (50) and the upper machine part (30) being respectively arranged with their underside (52, 32) on the upper side (22) of the machine base (20) and being mounted fixedly in place on the machine base (20) and the column (40) having on the outside a number of annular grooves (46) running horizontally at different heights as a device for receiving the machining units (120).

2. Honing machine according Claim 1, **characterized in that** the annular grooves (46) are formed such that they run around the periphery.

3. Honing machine (10) according to Claim 1 or 2, **characterized in that** the machine base (20) has on its upper side (22) a base reference area (24) and the annular table (50) and the upper machine part (30) are respectively arranged on the base reference area (24).

4. Honing machine (10) according to Claim 1, 2 or 3, **characterized in that** the upper machine part (30) is arranged and mounted with a column underside on the base reference area (24) of the machine base (20), the column (40) having for this purpose a column underside which forms the underside (32) of the upper machine part (30).

5. Honing machine (10) according to one of the preceding claims, **characterized in that** the machine base (20) has a reference plate (26) on its upper side (22) and an upper side of the reference plate (26) at least partially forms the base reference area (24).

6. Honing machine (10) according to one of the preceding claims, **characterized in that** the device (11) has between the upper machine part (30) and the annular table (50) a fit (57) in the radial direction, in particular a transition fit.

7. Honing machine (10) according to one of the preceding claims, **characterized in that** the annular table (50) and/or the machine base (20) has at different radial distances in relation to the axis of rotation (60) devices for receiving and/or positioning components.

8. Honing machine (10) according to one of the preceding claims, **characterized in that** the device carrier (54) is of a multipart construction and has a number of device carrier elements (54a - 54f), which are preferably designed as ring segments or rectangular plates.

9. Honing machine (10) according to one of the preceding claims, **characterized in that** the upper machine part (30) has above the upper column region an installation plate (70) for arranging units, the installation plate (70) preferably extending in the radial direction beyond a machining region (80), the machining region (80) being the region that is intended for arranging the machining units (120) and for machining the workpieces.

10. Honing machine (10) according to one of the preceding claims, **characterized in that** the column (40) is hollow.

11. Honing machine (10) according to one of the preceding claims, **characterized in that** the device (11) has devices for providing a seal against the ingress of liquids, dust and/or chips from above, from the machining region (80) into a region (82) that is located below the base reference area (24).

12. Honing machine (10) according to one of Claims 9 to 11, **characterized in that** the device (11) has devices for providing a seal against the ingress of liquids, dust and/or chips from below, from the machining region (80) into a region (84) that is located above the installation plate (70).

13. Honing machine (10) according to one of Claims 9 to 12, **characterized in that** a carrying arm device (90) for an operator control panel (94) is arranged on the installation plate (70) and/or **in that** a transporting device (92) for transporting the upper machine part (30) and/or the entire device (11) is fastened to the installation plate (70).

14. Honing machine (10) according to one of the preceding claims, **characterized in that** the column carries two or more machining units distributed over the circumference of the column, in addition to machining units that are set up for honing, at least one other machining unit and/or a measuring unit preferably being provided.

## Revendications

1. Machine de rodage (10) comprenant au moins une unité d'usinage (120) munie d'une broche d'outil (122) pour le rodage, la machine de rodage étant réalisée sous forme de machine de rodage à table annulaire (10) et présentant un dispositif (11) pour l'usinage mécanique de surface de pièces, qui comprend :
- une base de machine (20) avec un côté supérieur (22),
- une partie supérieure de machine (30) avec un côté inférieur (32), la partie supérieure de machine (30) présentant une colonne verticale (40) qui présente, dans une région de colonne supérieure, au niveau de son côté extérieur, des dispositifs (46) pour recevoir au moins une unité d'usinage (120) munie d'une broche d'outil (122) pour l'usinage mécanique de surface, et
- une table annulaire (50) avec un côté inférieur (52), la table annulaire (50) étant disposée dans une région de colonne inférieure autour de la colonne (40) et présentant un support de dispositif (54) pouvant tourner autour d'un axe de rotation vertical (60) pour recevoir au moins un dispositif de réception de pièce (124),
la table annulaire (50) et la partie supérieure de machine (30) étant disposées à chaque fois avec leur côté inférieur (52, 32) sur le côté supérieur (22) de la base de machine (20) et étant supportées fixement sur la base de machine (20) et la colonne (40) présentant à l'extérieur plusieurs rainures annulaires (46) s'étendant horizontalement à différentes hauteurs en tant que dispositif pour recevoir les unités d'usinage (120).

2. Machine de rodage selon la revendication 1, **caractérisée en ce que** les rainures annulaires (46) sont réalisées sous forme périphérique.

3. Machine de rodage (10) selon la revendication 1 ou 2, **caractérisée en ce que** la base de machine (20) présente, au niveau de son côté supérieur (22), une surface de référence de base (24) et la table annulaire (50) et la partie supérieure de machine (30) sont disposées à chaque fois sur la surface de référence de base (24).

4. Machine de rodage (10) selon la revendication 1, 2 ou 3, **caractérisée en ce que** la partie supérieure de machine (30) est disposée et supportée avec un côté inférieur de colonne sur la surface de référence de base (24) de la base de machine (20), la colonne (40) présentant à cet effet un côté inférieur de colonne qui forme le côté inférieur (32) de la partie supérieure de machine (30).

5. Machine de rodage (10) selon l'une quelconque des revendications précédentes, **caractérisée en ce que** la base de machine (20) présente, au niveau de son côté supérieur (22), une plaque de référence (26) et un côté supérieur de la plaque de référence (26) forme au moins en partie la surface de référence de base (24).

6. Machine de rodage (10) selon l'une quelconque des revendications précédentes, **caractérisée en ce que** le dispositif (11) présente entre la partie supérieure de machine (30) et la table annulaire (50) un ajustement (57) dans la direction radiale, en particulier un ajustement de transition.

7. Machine de rodage (10) selon l'une quelconque des revendications précédentes, **caractérisée en ce que** la table annulaire (50) et/ou la base de machine (20) présentent, à différentes distances radiales de l'axe de rotation (60), des dispositifs pour recevoir et/ou positionner des composants.

8. Machine de rodage (10) selon l'une quelconque des revendications précédentes, **caractérisée en ce que** le support de dispositif (54) est réalisé en plusieurs parties et présente plusieurs éléments de support de dispositif (54a - 54f) qui sont de préférence réalisés sous forme de segments annulaires ou de plaques rectangulaires.

9. Machine de rodage (10) selon l'une quelconque des revendications précédentes, **caractérisée en ce que** la partie supérieure de machine (30) présente, au-dessus de la région de colonne supérieure, une plaque d'installation (70) pour l'agencement d'agrégats, la plaque d'installation (70) s'étendant de préférence dans la direction radiale au-delà d'une région d'usinage (80), la région d'usinage (80) étant la région prévue pour l'agencement des unités d'usinage (120) et l'usinage des pièces.

10. Machine de rodage (10) selon l'une quelconque des revendications précédentes, **caractérisée en ce que** la colonne (40) est creuse.

11. Machine de rodage (10) selon l'une quelconque des revendications précédentes, **caractérisée en ce que** le dispositif (11) présente des dispositifs pour l'étanchéité, pour empêcher la pénétration de liquides, de poussière et/ou de copeaux par le dessus depuis la région d'usinage (80) dans une région (82) qui se trouve en dessous de la surface de référence de base (24).

12. Machine de rodage (10) selon l'une quelconque des revendications 9 à 11, **caractérisée en ce que** le dispositif (11) présente des dispositifs pour l'étanchéité, pour empêcher la pénétration de liquides, de poussière et/ou de copeaux par le dessous depuis la région d'usinage (80) dans une région (84) qui se trouve au-dessus de la plaque d'installation (70).

13. Machine de rodage (10) selon l'une quelconque des revendications 9 à 12, **caractérisée en ce que** sur la plaque d'installation (70) est disposé un dispositif à bras de support (90) pour un champ de commande (94) et/ou **en ce que** sur la plaque d'installation (70) est fixé un dispositif de transport (92) pour transporter la partie supérieure de machine (30) et/ou l'ensemble du dispositif (11).

14. Machine de rodage (10) selon l'une quelconque des revendications précédentes, **caractérisée en ce que** la colonne porte deux ou plus de deux unités d'usinage réparties sur la périphérie de la colonne, au moins une unité d'usinage supplémentaire et/ou une unité de mesure étant en outre prévues de préférence en plus des unités d'usinage qui sont prévues pour le rodage.
